(19) **Europäisches Patentamt**

**European Patent Office**

**Office européen des brevets**

(11) **EP 1 314 047 B1**

(12) **EUROPÄISCHE PATENTSCHRIFT**

(45) Veröffentlichungstag und Bekanntmachung des Hinweises auf die Patenterteilung:
**07.04.2004 Patentblatt 2004/15**

(21) Anmeldenummer: **01969232.6**

(22) Anmeldetag: **21.08.2001**

(51) Int Cl.⁷: $G01S\ 13/18$, $G01S\ 15/18$

(86) Internationale Anmeldenummer:
**PCT/DE2001/003105**

(87) Internationale Veröffentlichungsnummer:
**WO 2002/016958 (28.02.2002 Gazette 2002/09)**

(54) **SENSORSYSTEM UND VERFAHREN, INSBESONDERE ZUR ENTFERNUNGSBESTIMMUNG**

SENSOR SYSTEM AND RELATED METHOD, ESPECIALLY FOR DISTANCE CALCULATION

SYSTEME DE DETECTION ET PROCEDE ASSOCIE, EN PARTICULIER POUR LA DETERMINATION DE DISTANCES

(84) Benannte Vertragsstaaten:
**DE FR GB IT**

(30) Priorität: **22.08.2000 DE 10041094**

(43) Veröffentlichungstag der Anmeldung:
**28.05.2003 Patentblatt 2003/22**

(73) Patentinhaber: **ROBERT BOSCH GMBH**
**70442 Stuttgart (DE)**

(72) Erfinder:
- **ECKEL, Matthias**
  **61169 Freiberg (DE)**
- **HOETZEL, Juergen**
  **61197 Florstadt (DE)**

(56) Entgegenhaltungen:
**US-A- 4 608 674**      **US-A- 5 131 271**
**US-A- 5 973 996**

**Beschreibung**

STAND DER TECHNIK

Die Erfindung betrifft ein Sensorsystem, insbesondere zur Entfernungsbestimmung, das eine Sensoreinheit, eine Verstärkungseinheit und eine Vorgabeeinheit enthält. Die Sensoreinheit arbeitet während eines Erfassungszyklus in verschiedenen Erfassungsbereichen. Abhängig vom Erfassungsbereich wird mindestens ein Sensorsignal erzeugt, dessen Signalwerte durch ein sich im Erfassungsbereich befindendes Objekt beeinflusst werden. Die Verstärkungseinheit ist steuerbar und verstärkt das Sensorsignal abhängig vom Wert eines Verstärkungsparameters. Die Vorgabeeinheit dient zum vorgeben unterschiedlicher Werte für den Verstärkungsparameter während eines Erfassungszyklus.

Bekannte Sensoreinheiten arbeiten nach dem Puls-Echo-Prinzip, bei dem die Impulsdauer der Impulse einer Impulsfolge die Zeiträume festlegen, in denen Ultraschallwellen oder Mikrowellen in den Erfassungsbereich des Sensors abgestrahlt werden. Ein Objekt reflektiert die Wellen als Echo zum Sensor. Die vom Sensor empfangenen Signale werden ausgewertet, um zu ermitteln, ob sich in einem bestimmten Erfassungsbereich ein Objekt befindet, das eine bestimmte Größe überschreitet. Die Erfassungsbereiche bilden beispielsweise Messzellen, die einen Nahbereich unterteilen, beispielsweise einen Bereich von 0 Metern bis 7 Metern mit einem Rastermaß von 3 cm.

Bei Puls-Echo-Sensoren ist die Beziehung der vom Hindernis reflektierten Energie E zur Entfernung d zwischen Sensoreinheit und die Wellen reflektierendem Objekt nicht linear. Es gilt näherungsweise die folgende Beziehung:

$$E = 1/d^x \qquad (1)$$

wobei x ein vom Aufbau der Sensoreinheit abhängiger Exponent ist.

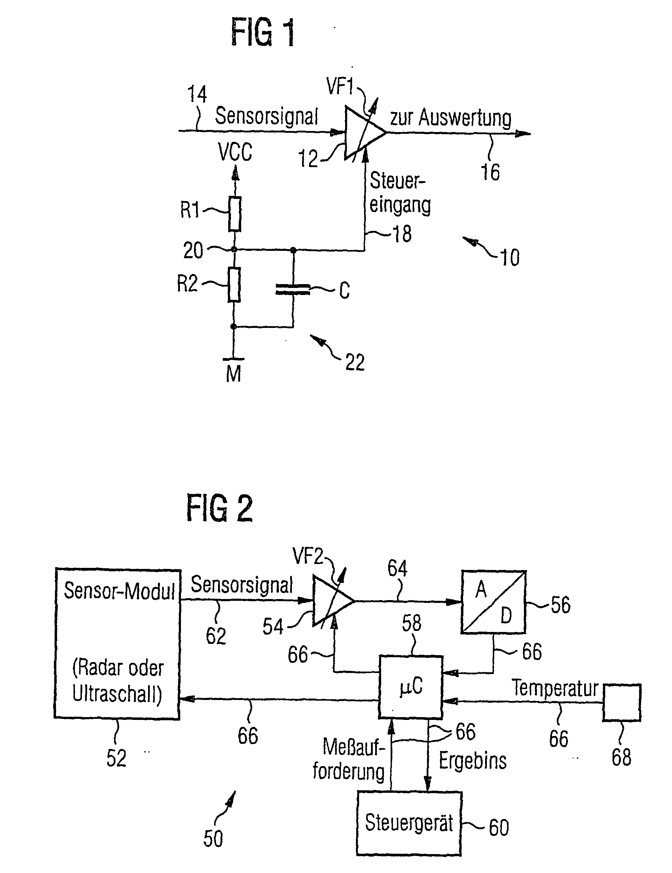

Fig. 1 zeigt eine schematische Darstellung einer bekannten Schaltung 10 zum Vorgeben der Werte für einen Verstärkungsfaktor VF1 eines Verstärkers 12. Der Verstärker 12 ist ein steuerbarer analoger Verstärker, z.B. vom Typ CA3080. Abhängig vom Verstärkungsfaktor VF1 wird ein Sensorsignal auf einer Eingangsleitung 14 verstärkt. Ein verstärktes Sensorsignal wird auf einer Ausgangsleitung 16 ausgegeben, mit der der Verstärker 12 ausgangsseitig verbunden ist. Die Ausgangsleitung 16 führt zu einer nicht dargestellten Auswerteschaltung.

Der Verstärkungsfaktor VF1 wird durch den Strom an einem Steuereingang des Verstärkers bestimmt. Der Steuereingang ist mit einer Steuerleitung 18 verbunden, die zum Abgriff 20 eines zwischen Masse und positiver Betriebsspannung VCC liegenden Spannungsteilers aus Widerständen R1 und R2 führt. Dem Widerstand R2 ist ein Kondensator C parallelgeschaltet. Die Widerstände R1, R2 und der Kondensator C bilden ein RC-Glied 22.

Bei der bekannten Sensoreinheit werden während eines Erfassungszyklus beispielsweise 256 Messzellen mit einem Abstand von jeweils 3 cm zueinander ausgemessen. Innerhalb einer Messzelle werden beispielsweise 300 Wellenpakete ausgesendet. Die durch die zurückreflektierten Wellen erzeugen Signale werden in der Sensoreinheit aufsummiert. Nach etwa 50 μs ist die Bearbeitung einer Messzelle abgeschlossen. Die Zeit eines Erfassungszyklus für alle Messzellen liegt beispielsweise bei etwa 10 ms.

Bei dem bekannten Sensor ist die Abfolge der Erfassungsbereiche sowie deren Dauer durch den Aufbau einer Sendeeinheit fest vorgegeben. Die Werte des Verstärkungsfaktors VF1 sind auf die Messbereiche abgestimmt und damit ebenfalls fest vorgegeben. Der Verstärkungsfaktor des Verstärkers 12 wird durch das RC-Glied 22 eingestellt wird. Das Anlegen einer Spannung an das RC-Glied 22 wird mit dem Beginn eines Erfassungszyklus synchronisiert. Während des Erfassungszyklus steigt die Spannung am RC-Glied 22 exponentiell an mit zunehmender Entfernung des Erfassungsbereiches zur Sensoreinheit. Durch diese Maßnahme erzeugt ein und dasselbe Objekt in allen Erfassungsbereichen etwa eine gleiche Ausgangsspannung am Verstärker. Die weitere Bearbeitung des verstärkten Sensorsignals wird dadurch vereinfacht.

Die der Erfindung zugrundeliegende Problematik besteht darin, ein weiteres einfach aufgebautes Sensorsystem bzw. - verfahren anzugeben, das insbesondere zur Entfernungsbestimmung eingesetzt werden kann.

Als nächstliegender Stand der Technik wird das Dokument US 5 973 996 angesehen.

VORTEILE DER ERFINDUNG

Die Erfindung gemäß Anspruch 1 bzw. 7 geht von der Überlegung aus, dass für eine optimale Erfassung zwischen Verstärkungsfaktor und bearbeitetem Erfassungsbereich ein fester Zusammenhang beachtet werden muss. Dieser Zusammenhang muss jedoch nicht zwangsläufig zu einer starren Vorgabe der Werte für den Verstärkungsparameter und für die Wahl der Erfassungsbereiche führen.

Das erfindungsgemäße Sensorsystem ist in Anspruch 1 spezifiziert. Es kann der Zusammenhang zwischen Erfassungsbereich und Verstärkungsfaktor weiterhin berücksichtigt werden. Zusätzlich lassen sich Vorgaben und Bedingungen berücksichtigen die einen anderen Zusammenhang zwischen Verstärkungsfaktor und Erfassungsbereichen oder eine andere Anwendung dieses Zusammenhangs erfordern, z.B. bei einem eingeschränkten Messbereich. Eine solche Bedingung ist beispielsweise die Temperatur, bei der das Sensorsystem arbeitet.

Die Vorgaben können situationsbezogen festgelegt werden. Beispielsweise kann bei einer kleinen Amplitude des Sensorsignals in einem bestimmten Erfassungsbereich der Wert des Verstärkungsparameters und damit die Verstärkung erhöht werden. Andererseits können situationsbezogen auch beispielsweise mehrere Messungen in demselben Erfassungsbereich durchgeführt werden, um dann beispielsweise durch eine Mittelwertbildung die Messgenauigkeit zu erhöhen.

Die Vorgaben lassen sich auch aus vorhergehenden Messwerten ableiten. Es entsteht ein Sensorsystem, das "lernfähig" ist.

In den Unteransprüchen finden sich vorteilhafte Weiterbildungen und Verbesserungen des jeweiligen Gegenstandes der Erfindung.

Bei einer Weiterbildung des erfindungsgemäßen Sensorsystems enthält die Vorgabeeinheit einen Prozessor, der Befehle eines Steuerungsprogramms ausführt. Durch das Verwenden eines Prozessors lassen sich die Abfolge der Erfassungsbereiche, die Werte für die Verstärkungsparameter und gegebenenfalls auch die Zeit zum Bearbeiten eines Erfassungsbereiches auf einfache Art und in vielfältiger Weise festlegen. Im Gegensatz zu einer Vorgabeeinheit, bei der zwar unterschiedliche Vorgaben berücksichtigt werden, die Erfassungsbereiche und die Werte für die Verstärkungsparameter jedoch schaltungstechnisch vorgegeben werden, kann eine Vorgabeeinheit mit Prozessor durch den Einsatz standardisierter Bauteile und standardisierter Schaltungen aufgebaut werden.

Bei einer nächsten Weiterbildung ist die Vorgabeeinheit mit der Sensoreinheit und mit der Verstärkungseinheit über Übertragungsstrecken zur Übertragung von Datenworten verbunden, beispielsweise über ein Bussystem. Die Vorgabeeinheit sendet Datenworte an die Sensoreinheit und/oder an die Verstärkungseinheit. In der Sensoreinheit wird dann abhängig von dem Wert des empfangenen Datenwortes ein Erfassungsbereich eingestellt. Alternativ wird, abhängig vom Wert des empfangenen Datenwortes, eine Folge von Erfassungsbereichen durchlaufen. In der Verstärkungseinheit wird auf ähnliche Weise, abhängig vom Wert des empfangenen Datenwortes, der Wert des Verstärkungsparameters festgelegt. Bei einem Ausführungsbeispiel wird der Wert des Datenwortes als Wert des Verstärkungsparameters übernommen. Bei einer alternativen Ausgestaltung wird, abhängig vom Wert des Verstärkungsparameters, eine Folge von Werten für den Verstärkungsparameter ausgewählt und nach einem vorgegebenen Zeitverlauf eingesetzt. Soll der Wert des Datenwortes als Wert des Verstärkungsparameters übernommen werden, so lässt sich beispielsweise ein Digital-Analog-Wandler einsetzen, um die Verstärkung eines stromgesteuerten Verstärkers zu beeinflussen.

Bei einer nächsten Weiterbildung des Sensorsystems mit Prozessor ist mit dem Ausgang der Verstärkungseinheit eine Analog-/Digital-Wandlereinheit verbunden, die abhängig vom Signalwert des verstärkten Sensorsignals ein Datenwort erzeugt und an die Vorgabeeinheit sendet. Die Vorgabeeinheit veranlasst, abhängig von den während eines Erfassungszyklus empfangenen Datenworten, die Ausgabe eines Erfassungsergebnisses. Bei dieser Weiterbildung hat der Prozessor eine doppelte Funktion. Zum einen wird er zur Vorgabe der Erfassungsbereiche und/oder zur Vorgabe der Werte für den Verstärkungsparameter genutzt. Zum anderen dient er zur Auswertung des Erfassungszyklus bzw. Erfassungszyklus.

Bei einer nächsten Ausgestaltung ist die Vorgabeeinheit mit einem Temperatursensor verbunden, zum Beispiel mit einem PTC-Element (Positive Temperature Coefficient). Die Vorgabeeinheit steuert die Sensoreinheit und/oder die Verstärkungseinheit auch abhängig vom Ausgangssignal des Temperatursensors. Der Einfluss der Temperatur auf das Messergebnis lässt sich mit Hilfe von Formeln oder Messungen ermitteln. Die Vorgabeeinheit und/oder die Verstärkungseinheit werden so angesteuert, dass der Einfluss der Temperatur auf das Messergebnis ausgeglichen wird. Beispielsweise hat ein Sendeelement der Sensoreinheit seine größte Leistung bei etwa 40°C. Bei 80°C ist die Leistung bereits um den Faktor 10 kleiner. Abhängig von der Temperatur wird beispielsweise der Wert des Verstärkungsfaktors geändert oder der Wert eines Schwellwertes verändert, mit dem das verstärkte Messsignal verglichen wird, um festzustellen, ob ein Objekt im aktuellen Erfassungsbereich größer als ein bestimmtes Vergleichsobjekt ist.

Die Vorgabeeinheit gibt während eines Erfassungszyklus unterschiedliche Schwellwerte vor. In einer Vergleichseinheit werden die Schwellwerte mit dem verstärkten Sensorsignal verglichen. Abhängig vom Vergleichsergebnis wird festgelegt, ob sich ein Objekt im Erfassungsbereich befindet oder nicht. Durch die Vorgabe unterschiedlicher Schwellwerte entstehen Freiheitsgrade für das Festlegen der Werte für den Verstärkungsparameter im Verlauf eines Erfassungszyklus. Beispielsweise lässt sich der Wert des Verstärkungsparameters beim Bearbeiten aufeinanderfolgender Erfassungsbereiche konstant halten. Der Wert des Schwellwertes wird jedoch so abgesenkt, wie es die oben angegebene Formel (1) erfordert. Es ist gegebenenfalls einfacher, die durch die Formel (1) angegebene Funktion nachzubilden als eine zu dieser Funktion inverse Funktion.

Die Sensoreinheit des Sensorsystems enthält bei einer Ausgestaltung mindestens eine Sendeeinheit zum Aussenden von elektromagnetischen Wellen oder Schallwellen sowie mindestens eine Empfangseinheit zum Empfangen von elektromagnetischen Wellen oder Schallwellen, die vom Objekt reflektiert werden. Als elektromagnetische Wellen werden Mikrowellen im Gigahertzbereich eingesetzt. Die Schallwellen haben eine vorzugsweise im Ultraschallbereich liegende Frequenz.

Eine so aufgebaute Sensoreinheit arbeitet nach dem eingangs beschriebenen Puls-Echo-Prinzip in verschiedenen Erfassungsbereichen.

Bei einer Ausgestaltung des Sensorsystems sind betreffen die auswählbaren Vorgaben die Temperatur in der Umgebung des Sensorsystems und/oder die zeitliche Abfolge der Bearbeitung von Erfassungsbereichen und/oder die Auswahl von Erfassungsbereichen.

Bei einer nächsten Ausgestaltung wird der Wert des Verstärkungsfaktors für mehrere aufeinanderfolgende Erfassungsbereiche unverändert beibehalten. In diesem Fall müssen Schwellwerte von Erfassungsbereich zu Erfassungsbereich geändert werden. Die Arbeitsweise des Verstärkers ist stabiler, wenn der Verstärkungsfaktor nicht dauernd geändert wird.

Die Erfindung betrifft außerdem ein Verfahren, insbesondere zur Entfernungsbestimmung, bei dessen Ausführung die Funktionen des erfindungsgemäßen Sensorsystems ausgeführt werden.

Die Erfindung geht von der Überlegung aus, dass für die Vorgabe der Werte des Verstärkungsparameters Freiheitsgrade entstehen, wenn innerhalb eines Erfassungszyklus nicht ein konstanter Schwellwert, sondern unterschiedlich große Schwellwerte verwendet werden.

Beim erfindungsgemäßen Sensorsystems wird dies ausgenutzt und es werden durch die Vorgabeeinheit gleiche Werte für den Verstärkungsfaktor beim Bearbeiten mehrerer aufeinanderfolgender Erfassungsbereiche vorgegeben. Die Vorgabe der Werte für den Verstärkungsfaktor lässt sich so vereinfachen, weil der Verstärkungsfaktor erst nach dem Bearbeiten der aufeinanderfolgenden Erfassungsbereiche geändert werden muss. Andererseits können die Schwellwerte jedoch nach einer Funktion geändert werden, die sich von einer Änderungsfunktion für die Werte des Verstärkungsparameters bei konstantem Schwellwert unterscheidet. Gegebenenfalls lässt sich die Funktion für die Vorgabe der Schwellwerte leichter ermitteln als die Funktion für die Vorgabe der Werte des Verstärkungsparameters. Die Funktion ist der durch die Formel (1) angegebenen Funktion sehr ähnlich und lässt sich durch einfache Messungen ermitteln. Weiterhin arbeitet der Verstärker stabiler, wenn der Wert des Verstärkungsfaktors nicht so häufig geändert wird.

Bei einer Ausgestaltung sind die Verstärkungs- und die Schwellwert-Vorgabeeinheit in einer Einheit realisiert, die einen Prozessor enthält.

Beim Verwenden eines Prozessors im Sensorsystem werden bei einer Ausgestaltung Datenworte zwischen den Vorgabeeinheiten und der Sensoreinheit sowie der Verstärkungseinheit übertragen, beispielsweise über ein Bussystem.

Der Prozessor wird bei einer nächsten Ausgestaltung auch zur Auswertung der Erfassung genutzt. Diese Doppelfunktion rechtfertigt den durch den Einsatz eines Prozessors entstehenden Aufwand.

ZEICHNUNGEN

Ausführungsbeispiele der Erfindung sind in der Zeichnung dargestellt und werden in der folgenden Beschreibung näher erläutert.

Es zeigen:

Fig. 1 eine schematische Darstellung einer bekannten Schaltung zum Vorgeben von Werten für einen Verstärkungsfaktor,

Fig. 2 ein Sensorsystem zur Entfernungsbestimmung,

Fig. 3 eine Verstärkungskurve, einer Messkurve und eine unter Verwendung der Verstärkungskurve erhaltene. Messkurve, und

Fig. 4 die unter Verwendung der Verstärkungskurve erhaltene Messkurve und eine daraus gewonnene Schwellwertkurve.

BESCHREIBUNG DER AUSFÜHRUNGSBEISPIELE

In den Figuren bezeichnen gleiche Bezugszeichen gleiche oder funktionsgleiche Elemente.

Fig. 2 zeigt ein Sensorsystem 50, das ein Sensormodul 52, einen Verstärker 54, einen Analog-/Digital-Wandler 56, einen Prozessor 58 (uC ≠ Mikrocontroller) sowie ein Steuergerät 60 enthält. Das Sensormodul arbeitet nach dem bekannten und eingangs erläuterten Puls-Echo-Prinzip. Der Aufbau des Sensormoduls muss nicht detailliert beschrieben werden, weil die Funktion seiner Bestandteile bekannt ist, beispielsweise die Funktion eines dielektrischen Radar-Oszillators, die Funktion von Radarsende- und Radar-Empfangsantennen, und die Funktion eines in der Radareinheit enthaltenen Mischers. Solche Sensormodule 52 werden beispielsweise von der Firma K6-AS (ehemals Motometer) hergestellt und vertrieben. Die bei kleineren Frequenzen arbeitenden Einheiten sind jedoch in Fig. 2 dargestellt.

Eine Leitung 62 verbindet den Ausgang des Sensormoduls 52 mit dem Eingang des Verstärkers 54. Über die Leitung 62 wird das Sensorsignal übertragen. Der Verstärker 54 ist beispielsweise vom Typ CA3080. Abhängig vom Wert eines Verstärkungsfaktors VF2 wird im Verstärker 54 aus dem eingangsseitigen Sensorsignal ein ausgangsseitiges, verstärktes Sensorsignal erzeugt und über eine Ausgangsleitung 64 zum A/D-Wandler 56 übertragen. Der Wandler 56 wandelt das analoge Signal an seinem Eingang in ein digitales Datenwort um, das über einen mehrere parallele Datenleitung enthaltenen Bus 66 zum Prozessor 58 übertragen wird. Der Prozessor 58 führt ein Steuerprogramm aus, dessen Befehle in einer nicht dargestellten Speichereinheit des Sensorsystems 50 gespeichert sind. Der Prozessor 58 gibt über das Bussystem 66 dem Sensormodul 52 Datenworte vor, deren Werte den jeweils aktuellen Messbereich bezeichnen. Dem Verstärker 54 gibt der Prozessor 58 über das Bussystem 66 Datenworte vor, deren Werte den Wert'des Verstärkungsfaktors VF2 bestimmen. Zwischen dem Bussystem 66 und dem Sensormodul 52 bzw. zwischen dem Bussystem 66 und dem Steuereingang des Verstärkers 54 befinden sich Digital-Analog-Wandlereinheiten (nicht dargestellt).

Das Sensorsystem 50 enthält außerdem einen Temperatursensor 68, der ein digitales Ausgangssignal abhängig von der Temperatur erzeugt, bei der das Sensorsystem 50 arbeitet. Die Temperatur wird mit Hilfe eines Datenwortes vom Temperatursensor 68 zum Prozessor 58 übermittelt, das über den Datenbus 66 übertragen wird.

Das Steuergerät 60 enthält beispielsweise eine Tastatur und eine Anzeigeeinheit. Zur Verbindung von Steuergerät 60 und Prozessor 58 wird ebenfalls das Bussystem 66 eingesetzt.

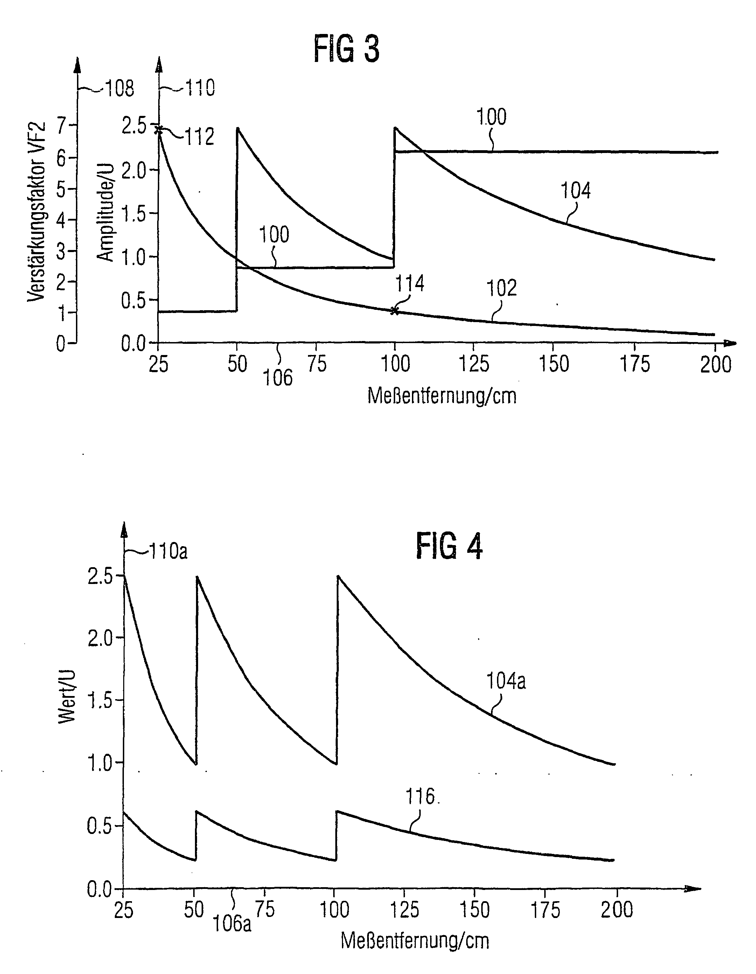

Die Funktion der Sensoreinheit 50, insbesondere die Vorgabe der Erfassungsbereiche und des Verstärkungsfaktors VF2 durch den Prozessor 58 werden unten anhand der Fig. 3 und 4 erläutert. Im Anschluss an die Fig. 3 und 4 wird auch die Funktion des Prozessors 58 bei der Berücksichtigung der vom Temperatursensor 68 erfassten Temperatur erläutert.

Fig. 3 zeigt die Verläufe einer abgestuften Verstärkungskurve 100, einer Messkurve 102 und einer Messkurve 104, die durch Verstärkung der zur Messkurve 102 gehörenden Signalwerte mit den jeweiligen durch die Verstärkungskurve 100 festgelegten Verstärkungsfaktoren entsteht.

Auf einer Abszissenachse 106 ist die Messentfernung in Zentimetern abgetragen. Ein Erfassungszyklus erfasst im Ausführungsbeispiel einen Messbereich von 25 cm bis 2 m. Der Messbereich ist in Messzellen unterteilt, zwischen denen jeweils ein Abstand von 3 cm liegt.

Eine Ordinatenachse 108 dient der Darstellung der Werte für den Verstärkungsfaktor VF2. Der Verstärkungsfaktor wird innerhalb eines Erfassungszyklus im Bereich von 1 bis 6,25 verändert. Die Ordinatenachse 108 gilt im Zusammenhang mit der Verstärkungskurve 100. Eine weitere Ordinatenachse 110 dient der Darstellung der Amplitudenwerte der zu den Messkurven 102 und 104 gehörenden Messsignale. Die Spannungswerte dieser Signale liegen zwischen 0 Volt und 2,5 Volt.

Die einzelnen Messzellen werden durch den Prozessor 58 jeweils in etwa 50 μs bearbeitet. In dieser Zeit werden vom Sensormodul etwa 300 Radarimpulse erzeugt und, falls sich in der jeweiligen Messzelle ein Objekt befindet, als reflektierte Radarimpulse wieder empfangen und aufsummiert. Das aufsummierte Signal wird über die Leitung 62 übertragen. Der Prozessor 58 sendet dem Sensormodul 52 ein Datenwort, das die bei 25 cm beginnende Messzelle bezeichnet. Nach den 50 μs wird vom Prozessor 58 ein Datenwort gesendet, das die nächste Messzelle, d.h. die bei 28 cm beginnende Messzelle, bezeichnet, und so weiter.

Zum Festlegen der Verstärkungsfaktoren wird zunächst ein sogenanntes Maximalobjekt vermessen, zum Beispiel eine Stahlwand mit der Ausdehnung der Rückseite eines Lkw's mit Containeraufsatz. Die Normale der Stahlwand zeigt beim Vermessen zum Sensormodul 52. Die Stahlwand wird nacheinander in die verschiedenen Messzellen gestellt, beginnend mit der bei 25 cm liegenden Messzelle bis zur bei 2 m liegenden Messzelle. Die von der Stahlwand reflektierten Radarimpulse werden über 50 μs aufsummiert und ergeben Sensorsignale, die durch die Messkurve 102 dargestellt werden. Bei einem Abstand von 25 cm zwischen Stahlwand und Sensormodul entsteht ein Signal mit einer Amplitude von etwa 2,5 Volt, siehe Messpunkt 112. Bei einem Abstand von 100 cm beträgt die Amplitude nur noch etwa 1 Volt, siehe Messpunkt 114. Die Messkurve 102 lässt sich mit Hilfe der Formel (1) beschreiben.

Um einen Analog/Digital-Wandler 56 geringer Bitbreite einsetzen zu können, wird das Sensorsignal mit unterschiedlichen Verstärkungsfaktoren VF2 verstärkt, siehe Verstärkungskurve 100. Im Messbereich zwischen 25 cm und 50 cm hat der Verstärkungsfaktor VF2 den Wert 1. Im Bereich zwischen 50 cm und 75 cm hat der Verstärkungsfaktor VF2 den 2,5-fachen Wert, d. h. den Wert 2,5. Im Bereich zwischen 100 cm und 200 cm wird ein nochmals um den Faktor 2,5 erhöhter Verstärkungsfaktor mit dem Wert 6,25 verwendet. Die Werte für den Verstärkungsfaktor VF2 werden so festgelegt, dass das durch die Kurve 104 dargestellte verstärkte Sensorsignal Amplitudenwerte zwischen 1 Volt und 2,5 Volt hat. Das bedeutet, dass der Wert des Verstärkungsfaktors VF2 erhöht werden muss, wenn der Wert des verstärkten Sensorsignals unter 1 Volt fällt. Die sich ergebende Messkurve 104 hat einen sägezahnförmigen Verlauf, bei dem die Grenzen der einzelnen "Zähne" durch die Messentfernungen vorgegeben ist, bei denen der Wert für den Verstärkungsfaktor VF2 verändert wird, hier bei 50 cm und bei 100 cm. Diese Werte werden in einem Speicher gespeichert. Die Werte für den Verstärkungsfaktor VF2 werden durch den Prozessor 58 an den Verstärker 54 übermittelt. Der Prozessor 58 sendet zu einem bestimmten Zeitpunkt das Datenwort an das Sensormodul, das die bei 50 cm liegende Messzelle bezeichnet. Unmittelbar danach wird an den Verstärker 54 ein Datenwort gesendet, das beispielsweise den Wert 2,5 enthält. Dieser Wert wird als neuer Wert für den Verstärkungsfaktor VF2 verwendet. Ein weiteres Datenwort wird vom Prozessor 58 an den Verstärker 54 erst dann gesendet, wenn unmittelbar zuvor an das Sensormodul ein Datenwort zur Bezeichnung der bei 100 cm beginnenden Messzelle gesendet worden ist.

Fig. 4 zeigt eine Messkurve 104a, die eine vergrößerte Darstellung der Messkurve 104 ist. Eine Abszissenachse 106a bezeichnet die Entfernungen von Messzellen zum Sensormodul 52 in Zentimetern. Die Abszissenachse 106a entspricht im wesentlichen der Abszissenachse 106. Eine Ordinatenachse 110a ist eine vergrößerte Darstellung der Ordinatenachse 100. Durch Multiplizieren der zur Messkurve 104a gehörenden Amplitudenwerte mit dem Faktor 0,25 entsteht eine Schwellwertkurve 116, die für jede Messzelle einen Schwellwert festlegt. Die Amplitudenwerte der Schwellwerte der Schwellwertkurve 116 betragen 25% der Amplitudenwerte der Messkurve 104 für dieselbe Messzelle. Der Verlauf der Schwellwertkurve 116 wird in der Speichereinheit des Sensorsystems gespeichert. Die vom Wandler 56 kommenden Datenworte werden mit Datenworten verglichen, welche die Amplitudenwerte der Schwellwertkurve 116 enthalten. Ist der Wert der Datenworte, die vom Wandler 56 kommen, größer als der Schwellwert, so bedeutet dies, dass sich in der aktuell bearbeiteten Messzelle ein Objekt befindet. Dabei werden auch Objekte erkannt, die wesentlich kleiner als das Maximalobjekt sind. Liegt dagegen der Wert des vom Wandler 56 kommenden Datenwortes unterhalb des Amplitudenwertes der Schwellwertkurve 108 im aktuellen Messbereich, so wird kein Objekt in der Messzelle erkannt, weil davon ausgegangen wird, dass die reflektierte Strahlung auf sehr kleine Objekte zurückzuführen ist, beispielsweise auf Gras oder Straßenschmutz.

Die Temperatur hat auf die Leistungsfähigkeit des Radaroszillators im Sensormodul einen erheblichen Einfluss. Beispielsweise hat der Radaroszillator bei -40°C die höchste Leistung und bei 80°C eine um den Faktor 10 geringere Leistung. Das Steuerprogramm für den Prozessor 58 ist so programmiert, dass beim ersten Ausführungsbeispiel die Werte für den Verstärkungsfaktor VF2 abhängig von der Temperatur gewählt werden. Mit steigender Temperatur werden größere Werte für den Verstärkungsfaktor VF2 eingesetzt, um trotz der bei größeren Temperaturen verringerten Leistung des Radaroszillators bei gleichen Objekten gleiche Amplitudenwerte zu erhalten. Die Schwellwertkurve 116 ist unabhängig von der Temperatur.

Bei einem zweiten Ausführungsbeispiel wird dagegen die Schwellwertkurve 108 abhängig von der Temperatur vorgegeben. Die Werte für den Verstärkungsfaktor bleiben von der Temperatur unbeeinflusst und haben beispielsweise den in Fig. 3 gezeigten Verlauf. Bei steigender Temperatur wird der Faktor zum Ermitteln der Schwellwertkurve 108 aus der Messwertkurve 104a verringert, um den Einfluss der Temperatur auf die Leistungsfähigkeit des Radaroszillators auszugleichen.

Bei einem dritten Ausführungsbeispiel werden sowohl die Werte des Verstärkungsfaktors als auch die Werte des Schwellwertes abhängig von der Temperatur geändert.

Bei einem vierten Ausführungsbeispiel lässt sich mit Hilfe des Steuergerätes 60 der Messbereich verändern. Beispielsweise wird anstelle des Messbereiches 25 cm bis 200 cm dann ein Messbereich von 0 cm bis 7 m bearbeitet. Der Prozessor sendet, abhängig von der jeweiligen Messaufforderung, unterschiedliche Datenworte an das Sensormodul 52 und den Verstärker 54.

## Patentansprüche

1. Sensorsystem (50) zur Entfernungsbestimmung, mit einer Sensoreinheit (52), die während eines Erfassungszyklus in verschiedenen Erfassungsbeieichen arbeitet und die abhängig vom Erfassungsbereich mindestens ein Sensorsignal (62) erzeugt, dessen Signalwerte durch ein sich im Erfassungsbereich befindendes Objekt beeinflusst wenden, mit einer steuerbaren Verstärkungseinheit (54) zum Verstärken des Sensorsignals (62), abhängig vom Wert eines Verstärkungsparameters (VF2), und mit einer Verstärkungsvorgabeeinheit (58) zum Vorgeben unterschiedlicher Werte für den Vetstärkungsparameter (VF2) während eines Erfassungszyklus, **dadurch gekennzeichnet, dass** die Verstärkungsvorgabeeinheit (58) in Abhängigkeit von dem zu untersuchenden Erfassungsbereich einen konstanten Verstärkungsparameter für den Erfassungsbereich setzt, dass die Verstärkungsvorgabeeinheit (58) während eines Erfassungszyklus unterschiedliche Schwellwerte (108) vorgibt, die für mehrere aufeinanderfolgende Erfassungsbereiche unterschiedlich sind, und dass abhängig vom Vergleichsergebnis des verstärkten Sensorsignals (64) mit den Schwellwerten festgelegt wird, ob sich ein Objekt einer bestimmten Größe in dem Erfassungsbereich befindet.

2. Sensorsystem (50) nach Anspruch 1, **dadurch gekennzeichnet, dass** die Verstärktungsvorgabeeinheit (58) einen Prozessor enthält, der Befehle eines Steuerungsprogramms ausführt.

3. Sensorsystem (50) nach Anspruch 2, **dadurch gekennzeichnet, dass** die Verstärkungsvorgabeeinheit (58) mit der Sensoreinheit (52) und mit der Verstärkungseinheit (54) über Übertragungsstrecken (66) zur Übertragung von Datenworten mit einer vorgegebenen Anzahl von Bit-Stellen verbunden ist, dass die Verstärkungsvorgabeeinheit (58) ein Datenwort an die Sensoreinheit (52) und/oder die Verstärkungseinheit (54) sendet, dass die Sensoreinheit (52) die Erfassungsbereiche abhängig von dem empfangenen Datenwort oder abhängig von den empfangenen Datenworten einstellt, und/oder dass die Verstärkungseinheit (54) den Wert des Verstärkungsparameters (VF2) abhängig von dem empfangenen Datenwort oder abhängig von den empfangenen Datenworten einstellt.

4. Sensorsystem (50) nach Anspruch 2 oder 3, **gekennzeichnet durch** eine mit dem Ausgang der Verstärkungseinheit (54) verbundene Analog/Digital-Wandlereinheit (56), die abhängig vom Signalwert an ihrem Eingang ein Datenwort erzeugt und an die Verstärkungsvorgabeeinheit (58) sendet, wobei die Verstärkungsvorgabeeinheit (58) abhängig von den während eines Erfassungszyklus empfangenen Datenworten die Ausgabe eines Erfassungsergebnisses veranlasst.

5. Sensorsystem (50) nach einem der vorhergehenden Ansprüche, **gekennzeichnet durch** einen mit der Verstärkungsyorgabeeinheit (58) verbundenen Temperatursensor (68), dessen Ausgangssignal (66) von der Temperatur abhängt, bei der das Sensorsystem (50) arbeitet, wobei die Verstärkungsvorgabeeinheit (58) die Sensoreinheit (52) und/ oder die Verstärkungseinheit (54) auch abhängig vom Ausgangssignal des Temperatursensors (68) steuert.

6. Sensorsystem (50) nach einem der vorhergehenden Ansprüche, **dadurch gekennzeichnet, dass** die Sensoreinheit (52) mindestens eine Sendereinheit zum Aussenden von elektromagnetischen Wellen oder von Schallwellen sowie mindestens eine Empfangseinheit zum Empfangen von elektromagnetischen Wellen oder von Schallwellen enthält, die vom Objekt reflektiert werden.

7. Verfahren zur Entfernungsbestimmung, bei dem eine Sensoreinheit (52) während eines Erfassungszyklus in verschiedenen Erfassungsbereichen arbeitet, die Sensoreinheit (52) mindestens ein Sensorsignal (62) erzeugt, dessen Signalwerte durch ein sich im Erfassungsbereich befindendes Objekt beeinflusst werden, das Sensorsignal (62) abhängig von einem Verstärkungsparameter (VF2) verstärkt wind, während eines Erfassungszyklus unterschiedliche Werte für den Verstärkungsparameter (VF2) vorgegeben werden, **dadurch gekennzeichnet, dass** in Abhängigkeit vom zu untersuchenden Erfassungsbereich ein konstanter Verstärkungsfaktor für den Erfassungsbereich gesetzt wird, dass für den Erfassungsbereich ein Schwellwert verwendet wird, der fur mehrere aufeinanderfolgende Erfassungsbereiche unterschiedlich ist, und dass in Abhängigkeit von einem Vergleich mit dem Schwellwert festgelegt wird, ob sich ein Objekt bestimmter Größe im Erfassungsbereich befindet.

**Claims**

1. Sensor system (50) for range finding, having a sensor unit (52) which operates in different detection areas during a detection cycle and produces at least one sensor signal (62) as a function of the detection area, whose signal values are influenced by an object which is located in the detection area, having a controllable amplification unit (54) for amplification of the sensor signal (62) depending on the value of a gain parameter (VF2), and having a gain preset unit (58) for presetting different values for the gain parameter (VF2) during a detection cycle, **characterized in that** the gain preset unit (58) sets a constant gain parameter for the detection area as a function of the detection area to be investigated, **in that** the gain preset unit (58) outputs different threshold values (108) during a detection cycle, and these threshold values (108) differ for two or more successive detection areas, and **in that** the result of the comparison of the amplified sensor signal (64) with the threshold values is used to determine whether an object of a specific size is located in the detection area.

2. Sensor system (50) according to Claim 1, **characterized in that** the gain preset unit (58) contains a processor, which carries out commands from a control program.

3. Sensor system (50) according to Claim 2, **characterized in that** the gain preset unit (58) is connected to the sensor unit (52) and to the amplification unit (54) via transmission paths (66) for transmission of data words with a predetermined number of bit positions, **in that** the gain preset unit (58) sends a data word to the sensor unit (52) and/or to the amplification unit (54), **in that** the sensor unit (52) selects the detection areas as a function of the received data word or as a function of the received data words, and/or **in that** the amplification unit (54) sets the value of the gain parameter (VF2) as a function of the received data word or as a function of the received data words.

4. Sensor system (50) according to Claim 2 or 3, **characterized by** an analogue/digital converter unit (56) which is connected to the output of the amplification unit (54), produces a data word as a function of the signal value at its input and sends this data word to the gain preset unit (58), with the gain preset unit (58) causing a detection result to be emitted as a function of the data words which are received during a detection cycle.

5. Sensor system (50) according to one of the preceding claims, **characterized by** a temperature sensor (68) which is connected to the gain preset unit (58) and whose output signal (66) depends on the temperature at which the sensor system (50) is operating, with the gain preset unit (58) controlling the sensor unit (52) and/or the amplification unit (54) as a function of the output signal from the temperature sensor (68), as well.

6. Sensor system (50) according to one of the preceding claims, **characterized in that** the sensor unit (52) contains at least one transmitter unit for transmission of electromagnetic waves or of sound waves, as well as at least one receiving unit for reception of electromagnetic waves or of sound waves which are reflected from the object.

7. Method for range finding, in which a sensor unit (52) operates in different detection areas during a detection cycle, the sensor unit (52) produces at least one sensor signal (62) whose signal values are influenced by an object which is located in the detection area, the sensor signal (62) is amplified as a function of a gain parameter (VF2), different values are preset for the gain parameter (VF2) during a detection cycle, **characterized in that** a constant gain factor is set for the detection area as a function of the detection area to be investigated, **in that** a threshold value which differs for two or more successive detection areas is used for the detection area, and **in that** a comparison process is carried out with the threshold value in order to determine whether an object of a specific size is located in the detection area.

**Revendications**

1. Système de détection (50) pour la détermination des distances, comportant une unité de détection (52) qui fonctionne dans diverses zones d'enregistrement au cours d'un cycle d'enregistrement et qui, en fonction de la zone d'enregistrement, produit au moins un signal de détection (62) dont les valeurs sont influencées par un objet se trouvant dans la zone d'enregistrement, une unité d'amplification réglable (54) pour l'amplification du signal de détection (62) en fonction de la valeur d'un paramètre d'amplification (VF2), et une unité de prédétermination d'amplification (58) en vue de prédéterminer des valeurs variables du paramètre d'amplification (VF2) au cours d'un cycle d'enregistrement, **caractérisé en ce que**
l'unité de prédétermination d'amplification (58) fixe, en fonction de la zone d'enregistrement à examiner, un paramètre d'amplification constant pour la zone d'enregistrement, l'unité de prédétermination d'amplification (58) prédétermine, au cours d'un cycle d'enregistrement, des valeurs de seuil (108) variables pour plusieurs zones d'enregistrement successives, et le résultat de la comparaison du signal de détection amplifié (64) avec les valeurs de seuil permet de préciser si un objet d'une certaine taille se trouve à l'intérieur de la zone d'enregistrement.

2. Système de détection (50) selon la revendication 1, **caractérisé en ce que**
l'unité de prédétermination d'amplification (58) contient un processeur qui exécute les ordres d'un programme de commande.

3. Système de détection (50) selon la revendication 2, **caractérisé en ce que**
l'unité de prédétermination d'amplification (58) est reliée à l'unité de détection (52) et à l'unité d'amplification (54) par des lignes de transmission (66) en vue de la transmission de mots contenant des données et comportant un nombre prédéterminé de bits, l'unité de prédétermination d'amplification (58) envoie un mot contenant des données à l'unité de détection (52) et/ou à l'unité d'amplification, l'unité de détection (52) ajuste les zones d'enregistrement en fonction du mot (ou des mots) contenant des données, et/ou l'unité d'amplification (54) ajuste la valeur du paramètre d'amplification (VF2) en fonction du mot reçu (ou des mots reçus) contenant des données.

4. Système de détection (50) selon la revendication 2 ou 3,
**caractérisé par**
une unité de conversion analogique-numérique (56), reliée à la sortie de l'unité d'amplification (54) et produisant à son entrée, en fonction de la valeur de signal, un mot contenant des données qu'elle envoie à l'unité de prédétermination d'amplification (58), l'unité de prédétermination d'amplification (58) initie, en fonction des mots reçus contenant des données au cours d'un cycle d'enregistrement, la sortie d'un résultat d'enregistrement.

5. Système de détection (50) selon l'une des revendications précédentes,
**caractérisé par**
un détecteur de température (68), relié à l'unité de prédétermination d'amplification (58) et dont le signal de sortie (66) dépend de la température à laquelle fonctionne le système de détection (50), l'unité de prédétermination d'amplification (58) commandant l'unité de détection (52) et/ou l'unité d'amplification (54) également en fonction du signal de sortie du détecteur de température (68).

6. Système de détection (50) selon l'une des revendications précédentes,
**caractérisé en ce que**
l'unité de détection (52) contient au moins une unité d'émission pour l'émission d'ondes électromagnétiques ou sonores, ainsi qu'au moins une unité de réception pour la réception d'ondes électromagnétiques ou sonores réfléchies par l'objet.

7. Procédé de détermination des distances, dans lequel une unité de détection (52) fonctionne, au cours d'un cycle d'enregistrement, dans différentes zones d'enregistrement, l'unité de détection (52) produit au moins un signal de détection (62) dont les valeurs sont influencées par un objet se trouvant dans la zone d'enregistrement, le signal de détection (62) est amplifié en fonction d'un paramètre d'amplification (VF2), au cours d'un cycle d'enregistrement, des valeurs variables sont prédéterminées pour le paramètre d'amplification(VF2),

**caractérisé en ce qu'**

en fonction de la zone d'enregistrement à examiner, un facteur d'amplification constant est fixé pour la zone d'enregistrement, et pour la zone d'enregistrement à examiner est utilisée une valeur de seuil qui est variable pour plusieurs zones d'enregistrement successives, puis une comparaison avec la valeur de seuil permet de préciser si un objet de taille déterminée se trouve dans la zone d'enregistrement.

# FIG 1

14 Sensorsignal    VF1    zur Auswertung

12    VCC

16

Steuereingang

R1

18

20

10

R2    C

22

M

# FIG 2

VF2    64

Sensor-Modul    Sensorsignal    A / D    56

62    54    58

66    66

(Radar oder
Ultraschall)    µC    Temperatur

66    66

52    66    68

Meßaufforderung    Ergebins

50

Steuergerät    60

## FIG 3

## FIG 4